# FASCICULE DE BREVET EUROPEEN

(11) **EP 1 802 445 B1**
(45) Date de publication et mention de la délivrance du brevet: **20.01.2010**
(21) Numéro de dépôt: 05809250.3
(22) Date de dépôt: 18.10.2005
(51) Int. Cl.: B29C 49/58

(54) **INSTALLATION DE SOUFFLAGE POUR LA FABRICATION DE RECIPIENTS EN MATIERE THERMOPLASTIQUE**
BLASFORMUNGSSYSTEM ZUR HERSTELLUNG THERMOPLASTISCHER BEHÄLTER
BLOW MOULDING SYSTEM FOR THE MANUFACTURE OF THERMOPLASTIC RECEPTACLES

(30) Priorité: 22.10.2004 FR 0411298
(43) Date de publication de la demande: 04.07.2007
(73) Titulaire: SIDEL PARTICIPATIONS, 76930 Octeville-sur-Mer (FR)
(72) Inventeur: MIE, Patrick, c/o SIDEL PARTICIPATIONS, 76930 Octeville sur Mer (FR)
(74) Mandataire: Cabinet Plasseraud
(86) Numéro de dépôt international: PCT/FR2005/002583
(87) Numéro de publication internationale: WO 2006/045925

(56) Documents cités:
- FR-A- 2 764 544
- US-A- 4 403 940
- US-A- 4 552 527

## Description

La présente invention concerne des perfection-nements apportés aux installations de soufflage propres à amener un fluide de soufflage sous haute pression à l'intérieur d'une ébauche en matériau thermoplastique qui est supportée, dans un moule de soufflage, par son col émergeant hors d'une paroi du moule, ladite installation comprenant un corps tubulaire fixe qui est en liaison avec une source de fluide sous haute pression et qui, à son extrémité inférieure supporte coaxialement et à coulissement un équipage mobile comportant une tuyère de soufflage propre, en position de soufflage, à être mise en situation de communication étanche avec le col de l'ébauche, la tuyère étant définie, latéralement, par une partie terminale, en forme de manchon, de l'équipage mobile, le corps tubulaire ayant une face frontale qui est à distance fixe de la susdite paroi du moule.

On connaît différentes installations de soufflage du type considéré, et en particulier des installations équipées de divers types de tuyères soit agencées pour être amenées en contact physique avec le col de l'ébauche à souffler (tuyère aboutée de façon étanche contre le buvant du col de l'ébauche, tuyère conique engagée de façon étanche à l'intérieur du col de l'ébauche, tuyère emmanchée sur le col de l'ébauche), soit agencées de façon surdimensionnée par rapport au col de l'ébauche de manière à être mises en appui frontal étanche contre la paroi du moule supportant l'ébauché tout en entourant à distance ledit col (tuyère-cloche : voir par exemple le document FR 2 764 544), qui répresente le préembule de la revendication 1, ou le document US-A-4 552 527 qui décrit une installation de soufflage présentant des caractéristiques similaires à la revendication 1 mais ayant un corp tubulaire mobile*.*

L'effort avec lequel la tuyère, quel que soit son type, est maintenue en appui étanche contre le col de l'ébauche ou contre la paroi du moule doit être suffisant pour s'opposer à la poussée de réaction, dirigée en sens inverse, due à la pression élevée (typiquement de l'ordre de 40 x 10⁵ Pa) du fluide de soufflage s'exerçant sur les parois de la tuyère. Cet effort d'appui doit également être suffisant pour assurer l'étanchéité de la coopération de la tuyère avec le col de l'ébauche grâce à une légère déformation élastique du matériau thermoplastique et, dans le cas de la tuyère-cloche, pour que le joint d'étanchéité prévu frontalement sur la tuyère soit suffisamment écrasé pour éviter qu'il soit chassé radialement de son appui sous l'effet de la pression élevée de soufflage.

En pratique, la commande de déplacement de l'équipage mobile incorporant la tuyère et de maintien de celle-ci en appui étanche sur le col de l'ébauche ou la paroi du moule s'effectue à l'aide d'un vérin pneumatique actionné par un fluide sous pression élevée au moins égale à la pression du fluide de soufflage, et le fluide délivré au vérin pneumatique est le fluide de soufflage lui-même.

Or, du point de vue financier, la production de fluide sous une pression élevée, telle que typiquement 40 x 10⁵ Pa, représente un poste de dépenses très important dans le fonctionnement de l'ensemble d'une installation de production de récipients (notamment de bouteilles) en matériau thermoplastique : en effet, plus la consommation de fluide à pression élevée est importante, plus le compresseur doit être dimensionné en conséquence et donc plus il est coûteux, et par ailleurs plus sa consommation électrique est élevée.

Les utilisateurs souhaitent aujourd'hui des installations de fabrication de rentabilité accrue ayant des cadences de production accrues avec des frais de fonctionnement moindres. Dans ce contexte, une réduction de la quantité de fluide à pression élevée employée par l'installation de fabrication de récipients, et plus particulièrement par l'installation de soufflage, parait souhaitable.

L'invention a donc pour but de répondre à cette attente et de proposer une installation de soufflage telle que mentionnée plus haut qui consomme sensiblement moins de fluide à pression élevée que les installations actuelles.

A ces fins, une installation de soufflage telle que mentionnée au préambule se caractérise, étant agencée conformément à l'invention, en ce que
- le fond de la tuyère est formé par ladite paroi frontale du corps tubulaire, et
- la paroi intérieure latérale du manchon est conformée de manière qu'une pression de fluide à l'intérieur de la tuyère n'engendre pas, sur ladite paroi latérale, de composante de force de réaction dirigée à l'opposé de ladite paroi du moule.

Grâce à l'agencement proposé conformément à l'intention, toutes les composantes de réaction dues à la pression du fluide de soufflage, lors de la phase de soufflage du récipient, qui s'exercent sur l'équipage mobile sont radiales et alors s'annulent globalement en raison de la symétrie de révolution de la paroi interne latérale de la tuyère, et, s'il y a une composante axiale, celle-ci est dirigée en direction de la paroi du moule et contribue au maintien en appui de la tuyère. Grâce à cet agencement, les moyens de commande du déplacement de l'équipage mobile et de maintien en appui de la tuyère en position de soufflage ont à développer un effort considérablement moindre que dans les installations actuelles et peuvent donc être réalisés sous une forme allégée et simplifiée.

Dans la pratique, il est avantageux de conserver, comme dans les installations antérieures, une commande pneumatique de l'équipage mobile, en faisant en sorte que des portions respectives en vis-à-vis du corps tubulaire et de l'équipage mobile soient agencées en vérin pneumatique au moins à simple effet pour le déplacement de l'équipage mobile le long du corps tubulaire en direction du moule et le maintien de la tuyère dans ladite situation de communication étanche avec le col de l'ébauche. Il en résulte que le maintien en appui étanche de la tuyère sur le col du récipient ou contre la paroi du moule peut être assuré avec une pression notablement plus faible que celle élevée du fluide de soufflage ; quant à la commande de déplacement de l'équipage mobile par le vérin pneumatique, une pression peu élevée du fluide moteur suffit là aussi. Ainsi le fonctionnement de l'équipage mobile incluant la tuyère peut être assuré (hormis le soufflage proprement dit) à l'aide d'un fluide moteur à pression relativement faible ; typiquement on pourra utiliser de l'air comprimé à 7 x 10⁵ Pa, qui est couramment disponible dans toutes les entreprises.

La conception d'une installation de soufflage conformément à l'invention conduit à une économie substantielle en fluide à pression élevée désormais réservé à la seule phase de soufflage. Il en résulte la possibilité d'avoir recours, pour la production du fluide à pression élevée, à un compresseur de capacité notablement inférieure, qui est donc moins coûteux à l'achat et qui nécessite une énergie électrique moindre en fonctionnement ; en outre, il est moins volumineux et son encombrement moindre contribue, en conjonction avec d'autres aménagements apportés dans le reste de l'installation de fabrication, à concevoir des installations de fabrication occupant moins de surface au sol.

Bien que divers agencements structurels soient envisageables, dans un mode de réalisation simple et donc avantageux, l'équipage mobile est extérieur au conduit tubulaire. Il est alors intéressant que le vérin pneumatique comprenne un piston fixe formé par un élargissement du corps tubulaire et une chambre mobile formée par un élargissement de l'équipage mobile abritant de façon étanche le piston.

De façon préférée, l'équipage mobile est mû pneumatiquement non seulement à la descente avec maintien en appui étanche de la tuyère contre le col de l'ébauche ou contre la paroi du moule, mais aussi à la montée une fois le soufflage du récipient achevé : à cet effet, le vérin pneumatique est à double effet.

Les dispositions conformes à l'invention peuvent trouver application quel que soit le type de tuyère mis en oeuvre ; en particulier elles peuvent s'appliquer dans le cas où la tuyère est agencée pour coopérer positivement de façon étanche avec le col de l'ébauche à souffler, notamment en étant engagée dans ledit col ; de façon préférée, elles peuvent s'appliquer dans le cas où la tuyère est agencée sous forme d'une tuyère-cloche présentant une partie terminale élargie propre à être mise en appui étanche par son bord frontal contre la paroi du moule tout en coiffant le col de l'ébauche sans être en contact avec celui-ci.

L'invention sera mieux comprise à la lecture de la description détaillée qui suit de certains modes de réalisation donnés uniquement à titre d'exemples non limitatifs. Dans cette description, on se réfère aux dessins annexés sur lesquels :
- la figure 1 est une vue schématique, en coupe, d'une partie d'une installation de soufflage agencée selon un mode de réalisation préféré de l'invention, et montrée dans une position non fonctionnelle ;
- la figure 2 est une vue schématique, en coupe, de l'installation de soufflage de la figure 1 montrée en position fonctionnelle ; et
- les figures 3 et 4 sont des vues schématiques, en coupe, de deux variantes de réalisation d'une installation de soufflage conforme à l'invention, montrées toutes deux en position fonctionnelle.

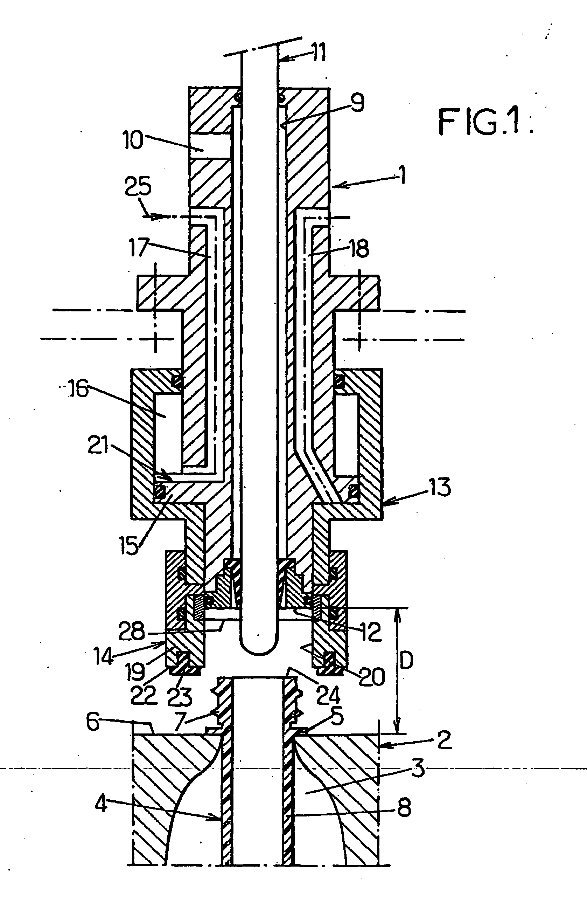

A la figure 1,à laquelle on se reporte tout d'abord, il est représenté une partie d'une installation de soufflage dont seuls les éléments nécessaires à la compréhension de l'invention sont représentés.

L'installation de soufflage comprend un corps 1 fixe, supporté par un bâti (non représenté) au-dessus d'un moule 2 lui aussi supporté fixe par le même bâti. En pratique, ce bâti peut faire partie d'une structure tournante ou carrousel regroupant une multiplicité de moules répartis circulairement et surmontés par des installations de soufflage respectives. En pratique toujours, le corps 1 de l'installation de soufflage s'étend sensiblement verticalement au-dessus du moule et sensiblement coaxialement à la cavité 3 de moulage du moule.

Pour mieux fixer les idées, on a montré une ébauche 4 (en l'occurrence une préforme) en position dans le moule 2, en attente de soufflage. L'ébauche 4 est disposée de manière à être soutenue, par sa collerette 5, sur la paroi 6 (paroi supérieure) du moule dans laquelle débouche la cavité 3 de moulage, de manière telle que seul le col 7 émerge du moule tandis que seul le corps 8 de l'ébauche 4 est engagé dans la cavité 3 de moulage.

Le corps 1 est agencé sous forme d'un corps tubulaire qui est traversé sur toute sa hauteur par un alésage 9 dans lequel débouche, par exemple vers son extrémité supérieure, un canal 10 radial raccordable avec une source de fluide sous pression élevée (typiquement de l'ordre de 40 x 10⁵ Pa). En général (dans le cas d'un processus de moulage par étirage-soufflage), l'alésage 9 possède un diamètre suffisant pour abriter une tige d'élongation 11 le traversant de haut en bas, la tige d'élongation étant supportée et animée par des moyens non représentés pour étirer axialement l'ébauche 4 à un moment du processus d'étirage-soufflage, en général à son début.

Les extrémités supérieure est inférieure de l'alésage 9 sont conformées pour guider de façon étanche la tige d'élongation dans son déplacement axial.

Dans ces conditions, le corps 1 se présente dans son ensemble sous l'aspect d'un conduit tubulaire fixe qui possède une face frontale 12 annulaire (traversée par la tige d'élongation 11) qui, du fait que le corps 1 et le moule 2 sont supportés par le même bâti, est à distance D fixe de la paroi 6 du moule 2 qui lui fait face.

Le corps 1 supporte coaxialement et à coulissement un équipage mobile 13 comportant une tuyère 14 de soufflage.

Bien que la commande de déplacement de l'équipage mobile et de maintien de la tuyère en position de soufflage puisse être de tout type (mécanique, électromagnétique, pneumatique), il est préférable que cette commande soit pneumatique. A cet effet, des portions respectives en vis-à-vis du corps 1 et de l'équipage mobile 13 sont agencées en vérin pneumatique 21 au moins à simple effet pour le déplacement de l'équipage mobile 13 le long du corps 1 en direction du moule et le maintien de la tuyère en situation de communication étanche avec le col 7 de l'ébauche 4.

Dans le mode de réalisation simple et préféré illustré à la figure 1, l'équipage mobile 13 entoure le corps 1 et le vérin pneumatique 21 comprend un piston 15 fixe formé par une partie de diamètre accru, ou élargissement, du corps 1 et une chambre 16 mobile formée par une partie de diamètre accru de l'équipage mobile 13 qui abrite de façon étanche le piston 15. Un canal 17 s'ouvre latéralement dans la partie supérieure du corps 1 et, s'étendant parallèlement à l'alésage 9 axial, il débouche radialement de la paroi latérale du corps 1 dans la chambre 16, au ras de la face supérieure du piston 15, de manière à commander la descente de l'équipage mobile 13.

Le vérin pneumatique 21 formé par le piston 15 et la chambre 16 est de préférence à double effet pour que la remontée de l'équipage mobile 13, après le soufflage, s'effectue également par commande pneumatique. A cet effet un second canal 18 est prévu dans le corps 1 selon un agencement analogue à celui du canal 17, à ceci près qu'il débouche inférieurement, dans la chambre 16, sur la face latérale du corps au ras de la face supérieure du piston 15.

Conformément à l'invention, la tuyère 14 est définie, latéralement, par une partie terminale en forme de manchon 19 de l'équipage mobile 13 et son fond est formé, uniquement, par la susdite face frontale du corps 1. En outre, la paroi intérieure latérale 20 du manchon est conformée de manière qu'une pression de fluide à l'intérieur de la tuyère n'engendre pas, sur cette paroi intérieure latérale 20, de composante de force de réaction dirigée à l'opposé de la paroi 6 du moule 2 (c'est-à-dire vers le haut sur la figure 1).

Autrement dit, la seule surface soumise, en présence d'une pression de fluide, à une force dirigée vers le haut est la face frontale 12 du corps 1, laquelle, du fait de la structure de l'installation, est fixe par rapport à la paroi 6 du moule 2, tandis que toutes les surfaces du manchon 19 ne sont soumises à aucune composante de force tournée vers le haut. Ainsi, lors de l'introduction du fluide de soufflage, la tuyère n'a pas tendance à être soulevée de sa position fonctionnelle et reste plaquée contre la paroi 6 du moule 2, et cela quelle que soit la pression du fluide admis.

Une conséquence importante réside dans le fait que le maintien de la tuyère en position fonctionnelle lors du soufflage peut être obtenu en appliquant à l'équipage mobile un effort de maintien relativement faible. Cela se traduit en pratique par le fait que le vérin pneumatique 21 peut être alimenté par un fluide sous relativement faible pression (typiquement sous la pression industrielle de 7 x 10⁵ Pa couramment disponible dans les ateliers), en lieu et place de la pression très élevée (typiquement de 40 x 10⁵ Pa) du fluide de soufflage utilisé jusqu'à présent à cet effet.

Dans l'exemple de réalisation illustré plus spécifiquement à la figure 1, la paroi intérieure latérale 20 du manchon 19 est typiquement cylindrique de révolution, avec un diamètre sensiblement supérieur au diamètre extérieur du col 7 de l'ébauche, de sorte que la face frontale 22 (munie d'un joint 23 annulaire d'étanchéité) du manchon est en appui étanche contre la paroi 6 du moule lorsque la tuyère est amenée en position fonctionnelle, la paroi intérieure latérale 20 étant écartée du col 7 (tuyère-cloche).

A titre indicatif, on notera que, de préférence, le manchon 19 est constitué par assemblage de plusieurs pièces de manière qu'à l'intérieur de la tuyère soit retenu un diaphragme 28, mince et élastique, percé pour le passage de la tige d'élongation 11 et du fluide de soufflage. Ce diaphragme a pour rôle de venir en appui élastique sur le buvant 24 du col 7 afin de maintenir l'ébauche 4 en position correcte sensiblement alignée coaxialement avec la tige d'élongation 11 et de l'empêcher de se soulever lors de l'introduction du fluide de soufflage à haute pression.

On peut souligner que l'agencement qui vient d'être décrit est structurellement très simple et que l'équipage mobile 13 peut être de faible hauteur (le manchon 19 faisant immédiatement suite à la partie définissant la chambre 16 du vérin pneumatique 21) : l'équipage mobile 13 présente donc une inertie réduite, ce qui est avantageux dans la perspective d'une installation fonctionnant à cadence élevée.

On remarquera également que le corps 1, pièce qui présente le développement vertical le plus important, est une pièce fixe qui peut être solidarisée au bâti de support de toute manière appropriée propre à lui assurer une stabilité parfaite. L'équipage mobile 13 qu'elle supporte à coulissement est donc assuré d'un guidage précis, malgré les jeux fonctionnels nécessaires à son déplacement, et ce guidage combiné avec la relativement faible course permet d'assurer un positionnement précis de la tuyère en position fonctionnelle de soufflage.

A la figure 1, l'installation de soufflage est illustrée en position non fonctionnelle, l'équipage mobile 13 étant en position haute avec la face frontale 22 du manchon 19 et le joint 23 situés au-dessus du niveau du buvant 24 du col de l'ébauche 4. L'équipage mobile 13 est amené et maintenu dans cette position par injection de fluide sous basse pression dans le canal 17 (flèche 25).

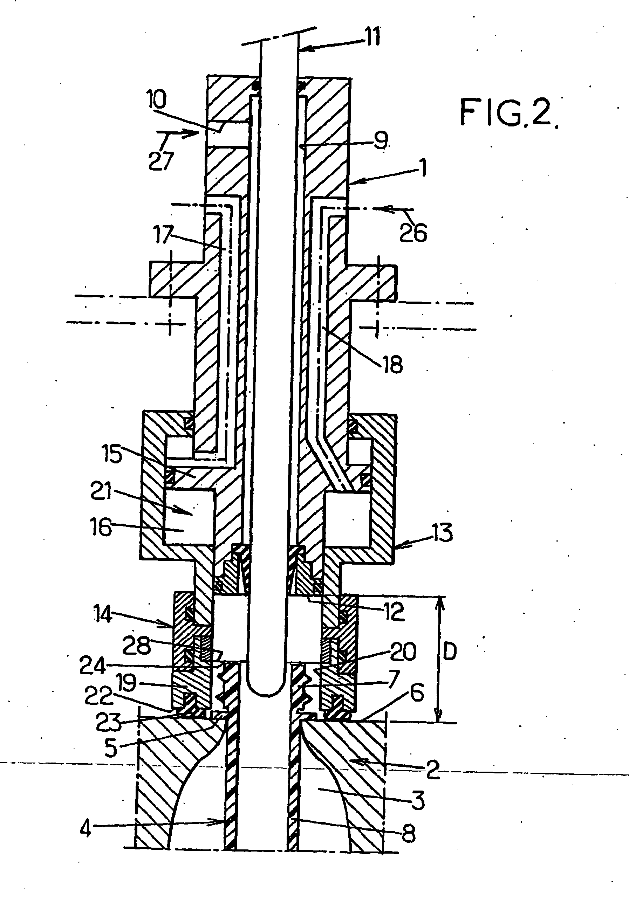

A la figure 2, l'installation de soufflage est illustrée en position fonctionnelle, l'équipage mobile 13 étant en position abaissée avec le joint 23 serré entre la face frontale 22 du manchon 19 et la paroi 6 du moule 2, ce qui permet d'assurer l'étanchéité. L'équipage mobile 13 est amené et maintenu dans cette position par injection de fluide sous basse pression dans le canal 18 (flèche 26). Le fluide de soufflage sous haute pression peut alors être introduit (flèche 27) dans l'alésage 9 et la tuyère.

Les dispositions conformes à l'invention viennent d'être décrites plus spécifiquement dans le cadre d'une installation de soufflage équipée d'une tuyère-cloche, ce type d'installation étant d'un emploi courant en raison des avantages intéressants qu'elle présente. Toutefois, les dispositions conformes à l'invention ne sont pas exclusives de la mise en oeuvre d'une tuyère-cloche et peuvent être associées à d'autres types de tuyères (tuyère engagée à l'intérieur du col de l'ébauché, tuyère aboutée contre le buvant du col de l'ébauche).

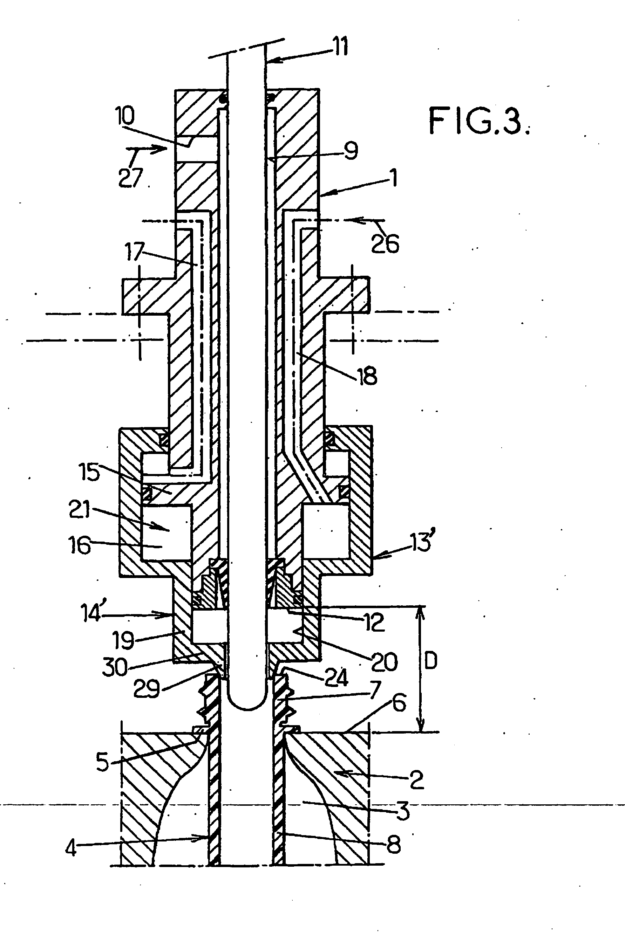

A titre d'exemple, la figure 3 illustre une installation de soufflage agencée conformément à l'invention qui reprend la même structure que celle de l'installation de la figure 1, à la conformation près de la tuyère. A la figure 3, la tuyère 14' est agencée pour être engagée à l'intérieur du col 7 de l'ébauche 4 et à cet effet sa partie terminale est conformée sous forme d'une jupe 29 annulaire, saillant vers le bas, dont la face externe est tronconique et propre à être emmanchée à force contre le bord intérieur du buvant 24 du col 7 de l'ébauche 4. La jupe 29 est portée par une paroi de bout 30, d'étendue transversale. Le reste de l'équipage mobile 13' peut être identique à ce qu'il est à la figure 1.

Dans un tel mode de réalisation, la pression du fluide de soufflage est appliquée sur la face interne de la paroi de bout 30, de sorte que la force correspondante vient s'ajouter à l'effort développé par le vérin pneumatique 21 pour maintenir la tuyère en appui contre le buvant 24.

Dans une variante de réalisation, la paroi de bout 30, au lieu d'être transversale, pourrait être tronconique à conicité tournée vers le bas, avec des résultats analogues.

Une disposition sensiblement analogue à celle de la figure 3 pourrait être adoptée dans le cas d'une tuyère propre à être aboutée contre le buvant 24.

Dans la description qui précède, les dispositions conformes à l'invention font appel à un équipage mobile 13 agencé extérieurement au corps 1 fixe, car c'est l'agencement qui présente la plus grande facilité et simplicité de réalisation avec des pièces de formes relativement simples et peu coûteuses à usiner. Par ailleurs, cette disposition permet que la chambre délimitée par la tuyère, lorsque cette dernière est en position fonctionnelle, ait le volume le plus réduit possible compatible avec les dimensions du col de l'ébauche, ce qui contribue à l'économie de fluide de soufflage : il convient en effet de noter que c'est de l'air de soufflage qui est amené dans le volume de la tuyère et qui s'ajoute au volume nécessaire à la formation du récipient. Ainsi, si le volume de la chambre délimitée par la tuyère est de l'ordre de 30 cm³, un soufflage sous une pression de 40 x 10⁵ Pa nécessite de comprimer 12 litres d'air supplémentaire uniquement pour remplir la tuyère.

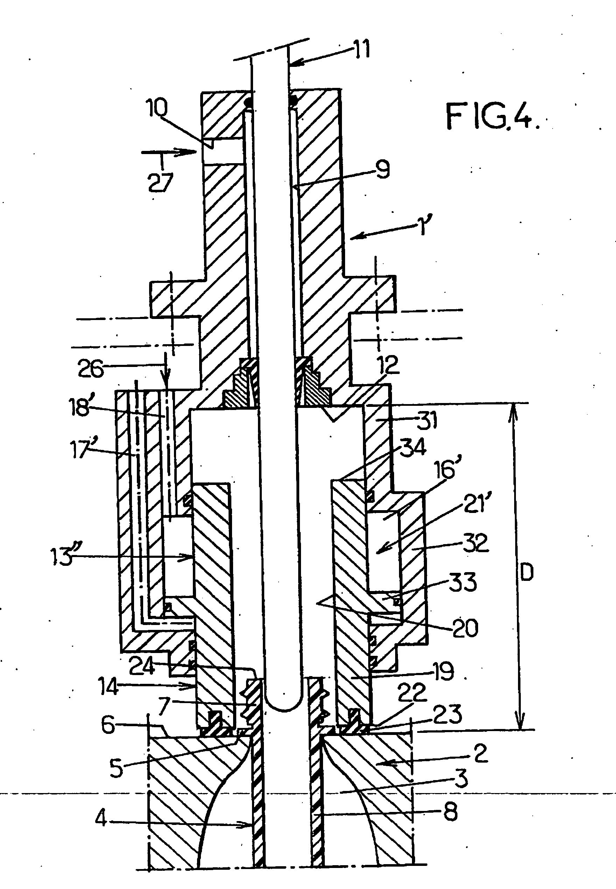

Toutefois, cette solution technique n'est pas la seule envisageable et, si cela s'avère nécessaire, bien que cela soit moins avantageux sur le plan de la consommation d'air, il est possible de mettre en oeuvre un équipage mobile intérieur au corps fixe, comme illustré à la figure 4 en liaison avec une tuyère du type tuyère-cloche. Il convient de noter que la tuyère pourrait être du type de celle 14' apparaissant sur la figure 3.

Le corps 1' fixe est agencé inférieurement sous forme élargie avec une paroi 31 servant intérieurement de guide à l'équipage mobile 13" qu'elle abrite. La paroi 31 est elle-même localement élargie (en 32) pour définir une chambre 16' annulaire aux extrémités de laquelle débouchent deux canaux 17', 18' creusés dans la paroi 31. L'équipage mobile 13" se présente sous la forme générale d'un organe tubulaire cylindrique de révolution comportant une saillie annulaire externe formant piston 33 abrité de façon étanche dans la chambre 16' définie par la paroi 32. A sa partie inférieure, l'organe tubulaire précité est agencé comme illustré à la figure 1 pour former la tuyère 14 analogue à ce qui a été décrit plus haut. On notera que, dans ce mode de réalisation également, la pression du fluide de soufflage engendre, sur la paroi frontale annulaire supérieure 34 de l'équipage mobile 13" une force dirigée vers le bas, qui contribue à maintenir la tuyère en appui étanche contre la paroi 6 du moule.

## Revendications

1. Installation de soufflage propre à amener un fluide de soufflage sous haute pression à l'intérieur d'une ébauche (4) en matériau thermoplastique qui est supportée, dans un moule (2) de soufflage, par son col (7) émergeant hors d'une paroi (6) du moule (2), ladite installation comprenant un corps (1, 1') tubulaire fixe qui est en liaison avec une source de fluide sous haute pression et qui, à son extrémité inférieure, supporte coaxialement et à coulissement un équipage mobile (13, 13', 13") comportant une tuyère (14, 14') de soufflage propre, en position de soufflage, à être mise en situation de communication étanche avec le col (7) de l'ébauche (4), la tuyère (14, 14') étant définie, latéralement, par une partie terminale, en forme de manchon (19), de l'équipage mobile, le corps (1, 1') tubulaire ayant une face frontale (12) qui est à distance (D) fixe de la susdite paroi (6) du moule (2), **caractérisée en ce que**
- le fond de la tuyère (14, 14') est formé par ladite paroi frontale (12) du corps (1, 1') tubulaire, et
- la paroi intérieure latérale (20) du manchon (19) est conformée de manière qu'une pression de fluide à l'intérieur de la tuyère n'engendre pas, sur ladite paroi latérale, de composante de force de réaction dirigée à l'opposé de ladite paroi (6) du moule.

2. Installation de soufflage selon la revendication 1, **caractérisée en ce que** des portions respectives en vis-à-vis du corps (1) tubulaire et de l'équipage mobile (13, 13', 13") sont agencées en vérin pneumatique (21, 21') au moins à simple effet pour le déplacement de l'équipage mobile le long du corps tubulaire en direction du moule (2) et le maintien de la tuyère (14, 14') dans ladite situation de communication étanche avec le col de l'ébauche.

3. Installation de soufflage selon la revendication 1 ou 2, **caractérisée en ce que** l'équipage mobile (13, 13') est extérieur au conduit tubulaire.

4. Installation de soufflage selon les revendications 2 et 3, **caractérisée en ce que** le vérin pneumatique (21) comprend un piston (15) fixe formé par un élargissement du corps (1) tubulaire et une chambre (16) mobile formée par un élargissement de l'équipage mobile (13) abritant de façon étanche le piston (15).

5. Installation de soufflage selon la revendication 1 ou 2, **caractérisée en ce que** l'équipage mobile (13") est intérieur au conduit tubulaire ménagé dans le corps (1') fixe.

6. Installation de soufflage selon les revendications 2 et 5, **caractérisée en ce que** le vérin pneumatique (21') comprend une chambre (16') fixe formée par un élargissement (32) du corps (1') tubulaire et un piston (33) mobile formé par un élargissement de l'équipage mobile (13") abrité de façon étanche dans la chambre (16') .

7. Installation de soufflage selon l'une quelconque des revendications 2 à 6, **caractérisée en ce que** le vérin pneumatique (21, 21') est à double effet.

8. Installation de soufflage selon l'une quelconque des revendications 2 à 7, **caractérisée en ce que** le fluide de commande du vérin pneumatique (21, 21') est un fluide à basse pression.

9. Installation de soufflage selon l'une quelconque des revendications 1 à 8, **caractérisée en ce que** la tuyère (14') est agencée pour coopérer positivement de façon étanche avec le col (7) de l'ébauche (4) à souffler, notamment en étant engagée dans ledit col (7).

10. Installation de soufflage selon l'une quelconque des revendications 1 à 8, **caractérisée en ce que** la tuyère (14) est agencée sous forme d'une tuyère-cloche présentant une partie terminale élargie propre à être mise en appui étanche par sa face frontale (22) contre la paroi (6) du moule (2) tout en coiffant le col (7) de l'ébauche (4) sans être en contact avec celui-ci.

11. Installation de soufflage selon la revendication 10, **caractérisée en ce que** la face frontale (22) de la partie terminale élargie de la tuyère (14) est munie d'un joint (23) d'étanchéité qui, lorsque la tuyère (14) est en position fonctionnelle, est serré entre la face frontale (22) du manchon (19) et la paroi (6) du moule (2), afin d'assurer l'étanchéité.

## Claims

1. A blow-molding system able to convey a blow-molding fluid at high pressure into a thermoplastic parison (4) which is supported, in a blow-molding mold (2), by its neck (7) emerging from a wall (6) of the mold (2), said system comprising a stationary tubular body (1, 1') which is in communication with a source of high-pressure fluid and which, at its lower end, coaxially and slidably supports movable equipment (13, 13', 13") comprising a blowing nozzle (14, 14') able, in the blowing position, to be placed in sealed communication with the neck (7) of the parison (4), the nozzle (14, 14') being laterally defined by a terminal part, in the form of a sleeve (19), of the movable equipment, the tubular body (1, 1') having a transverse face (12) which lies a fixed distance (D) from the aforementioned wall (6) of the mold (2), **characterized in that**
- the end wall of the nozzle (14, 14') is formed by said transverse wall (12) of the tubular body (1, 1'), and
- the lateral interior wall (20) of the sleeve (19) is shaped in such a way that fluid pressure inside the nozzle does not generate, on said lateral wall, a reaction force component directed away from said wall (6) of the mold.

2. The blow-molding system as claimed in claim 1, **characterized in that** respective portions of the tubular body (1) and of the movable equipment (13, 13', 13") which face each other are arranged as an at least single-acting pneumatic actuator (21, 21') for moving the movable equipment along the tubular body in the direction of the mold (2) and holding the nozzle (14, 14') in said sealed communication with the neck of the parison.

3. The blow-molding system as claimed in claim 1 or 2, **characterized in that** the movable equipment (13, 13') is external to the tubular pipe.

4. The blow-molding system as claimed in claims 2 and 3, **characterized in that** the pneumatic actuator (21) comprises a stationary piston (15) formed by a widening of the tubular body (1) and a movable chamber (16) formed by a widening of the movable equipment (13) housing the piston (15) in a sealed fashion.

5. The blow-molding system as claimed in claim 1 or 2, **characterized in that** the movable equipment (13") is internal to the tubular pipe formed in the stationary body (1').

6. The blow-molding system as claimed in claims 2 and 5, **characterized in that** the pneumatic actuator (21') comprises a stationary chamber (16') formed by a widening (32) of the tubular body (1') and a movable piston (33) formed by a widening of the movable equipment (13") housed in a sealed fashion in the chamber (16').

7. The blow-molding system as claimed in any one of claims 2 to 6, **characterized in that** the pneumatic actuator (21, 21') is a dual-acting actuator.

8. The blow-molding system as claimed in any one of claims 2 to 7, **characterized in that** the control fluid that operates the pneumatic actuator (21, 21') is a low-pressure fluid.

9. The blow-molding system as claimed in any one of claims 1 to 8, **characterized in that** the nozzle (14') is designed to collaborate positively and in a sealed fashion with the neck (7) of the parison (4) that is to be blow-molded, particularly being engaged in said neck (7) .

10. The blow-molding system as claimed in any one of claims 1 to 8, **characterized in that** the nozzle (14) is designed in the form of a bell-shaped nozzle having a widened terminal part able to press in a sealed fashion via its transverse face (22) against the wall (6) of the mold (2) while at the same time fitting over the neck (7) of the parison (4) without being in contact therewith.

11. The blow-molding system as claimed in claim 10, **characterized in that** the transverse face (22) of the widened terminal part of the nozzle (14) is fitted with a seal (23) which, when the nozzle (14) is in the functional position, is clamped between the transverse face (22) of the sleeve (19) and the wall (6) of the mold (2) so as to ensure sealing.

## Patentansprüche

1. Blasformanlage, die dafür geeignet ist, ein Blasformfluid unter hohem Druck ins Innere eines Vorformlings (4) aus einem thermoplastischen Werkstoff zu führen, der in einem Blasformwerkzeug (2) an seinem Hals (7) gehalten wird, der aus einer Wand (6) der Form (2) ragt, wobei die Anlage einen feststehenden röhrenförmigen Körper (1, 1') umfasst, der mit einer Hochdruckfluidquelle in Verbindung steht und der an seinem unteren Ende koaxial und verschiebbar eine bewegliche Ausrüstung (13, 13', 13") trägt, die eine Blasformdüse (14, 14') aufweist, die in der Blasstellung dafür geeignet ist, mit dem Hals (7) des Vorformlings (4) abdichtend in Verbindung gebracht zu werden, wobei die Düse (14, 14') seitlich von einem Endabschnitt der beweglichen Ausrüstung in Form einer Hülse (19) definiert wird, wobei der röhrenförmige Körper (1, 1') eine Stirnwand (12) aufweist, die einen festen Abstand (D) zu der vorstehend genannten Wand (6) der Form (2) besitzt, **dadurch gekennzeichnet, dass**
- der Düsenboden (14, 14') von der Stirnwand (12) des röhrenförmigen Körpers (1, 1') gebildet wird, und
- die innere Seitenwand (20) der Hülse (19) derart geformt ist, dass der Fluiddruck im Inneren der Düse an der Seitenwand keine Reaktionskraftkomponente erzeugt, die von der Wand (6) der Form weg gerichtet ist.

2. Blasformanlage nach Anspruch 1, **dadurch gekennzeichnet, dass** die jeweiligen gegenüber liegenden Abschnitte des röhrenförmigen Körpers (1) und der beweglichen Ausrüstung (13, 13', 13") in einem mindestens einfachwirkenden Druckluftzylinder (21, 21') angeordnet sind, damit die bewegliche Ausrüstung entlang dem röhrenförmigen Körper in Richtung der Form (2) bewegt wird und die Düse (14, 14') in der Stellung bleibt, in der sie abdichtend mit dem Hals des Vorformlings in Verbindung steht.

3. Blasformanlage nach Anspruch 1 oder 2, **dadurch gekennzeichnet, dass** sich die bewegliche Ausrüstung (13, 13') außerhalb des röhrenförmigen Rohrs befindet.

4. Blasformanlage nach Anspruch 2 und 3, **dadurch gekennzeichnet, dass** der Druckluftzylinder (21) einen feststehenden Kolben (15) umfasst, der durch eine Verbreiterung des röhrenförmigen Körpers (1) gebildet wird, und eine bewegliche Kammer (16), die durch eine Verbreiterung der beweglichen Ausrüstung (13) gebildet wird und den Kolben (15) abdichtend aufnimmt.

5. Blasformanlage nach Anspruch 1 oder 2, **dadurch gekennzeichnet, dass** sich die bewegliche Ausrüstung (13") innerhalb des röhrenförmigen Rohrs befindet, das im feststehenden Körper (1') vorgesehen ist.

6. Blasformanlage nach Anspruch 2 und 5, **dadurch gekennzeichnet, dass** der Druckluftzylinder (21') eine feststehende Kammer (16') umfasst, die durch eine Verbreiterung (32) des röhrenförmigen Körpers (1') gebildet wird, und einen beweglichen Kolben (33), der durch eine Verbreiterung der beweglichen Ausrüstung (13") gebildet wird und abdichtend in der Kammer (16') aufgenommen ist.

7. Blasformanlage nach einem der Ansprüche 2 bis 6, **dadurch gekennzeichnet, dass** der Druckluftzylinder (21, 21') doppeltwirkend ist.

8. Blasformanlage nach einem der Ansprüche 2 bis 7, **dadurch gekennzeichnet, dass** das Betätigungsfluid des Druckluftzylinders (21, 21') ein Niederdruckfluid ist.

9. Blasformanlage nach einem der Ansprüche 1 bis 8, **dadurch gekennzeichnet, dass** die Düse (14') so angeordnet ist, dass sie formschlüssig abdichtend mit dem Hals (7) des durch Blasformen zu behandelnden Vorformlings (4) zusammenwirkt, insbesondere indem sie im Hals (7) steckt.

10. Blasformanlage nach einem der Ansprüche 1 bis 8, **dadurch gekennzeichnet, dass** die Düse (14) in Form einer glockenförmigen Düse ausgelegt ist, die einen verbreiterten Endabschnitt aufweist, der dafür geeignet ist, mit seiner Vorderseite (22) abdichtend gegen die Wand (6) der Form (2) gedrückt zu werden, wobei der Hals (7) des Vorformlings (4) überdeckt wird, ohne dass er berührt wird.

11. Blasformanlage nach Anspruch 10, **dadurch gekennzeichnet, dass** die Vorderseite (22) des verbreiterten Endabschnitts der Düse (14) mit einer Dichtung (23) versehen ist, die, wenn sich die Düse (14) in der funktionsbereiten Stellung befindet, zwischen die Vorderseite (22) der Hülse (19) und die Wand (6) der Form (2) geklemmt ist, um die Dichtheit zu gewährleisten.
